# EUROPÄISCHE PATENTSCHRIFT

(11) **EP 1 773 650 B1**
(45) Veröffentlichungstag und Bekanntmachung des Hinweises auf die Patenterteilung: **06.10.2010**
(21) Anmeldenummer: 05775869.0
(22) Anmeldetag: 03.08.2005
(51) Int. Cl.: B62D 65/02, B21D 39/03, B21D 22/02

(54) **VERFAHREN UND WERKZEUGEINRICHTUNG ZUM UMFORMEN**
FORMING TOOL AND METHOD
PROCEDES ET EQUIPEMENT DE FORMAGE

(30) Priorität: 05.08.2004 DE 102004038208
(43) Veröffentlichungstag der Anmeldung: 18.04.2007
(73) Patentinhaber: ECKOLD GmbH & Co. KG, 37444 St. Andreasberg (DE)
(72) Erfinder: ROTTER, Sebastian, 71069 Sindelfingen (DE); SPIES, Bernhard, 71063 Sindelfingen (DE); THALER, Heiko, 71067 Sindelfingen (DE); WIDDEL, York, 30890 Barsinghausen (DE)
(74) Vertreter: Rehmann, Thorsten
(86) Internationale Anmeldenummer: PCT/EP2005/008415
(87) Internationale Veröffentlichungsnummer: WO 2006/015784

(56) Entgegenhaltungen:
- DE-A1- 3 642 900
- DE-C1- 19 524 164
- US-A- 5 133 206

## Beschreibung

Die Erfindung betrifft ein Verfahren zum Umformen mindestens eines Abschnitts an einem weniger genau positionierten Körper um einen solchen Betrag, dass der umzuformende Abschnitt demgegenüber in einer genauer definierten Position liegt, mittels einer Werkzeugeinrichtung, die mindestens eine Halteeinrichtung und mindestens einen in Richtung der Halteeinrichtung bewegbaren Formstempel aufweist, wobei der umzuformende Abschnitt zwischen der Halteeinrichtung und dem Formstempel angeordnet ist, mit folgenden Schritten: Die Halteeinrichtung wird an dem umzuformenden Abschnitt positioniert; der umzuformende Abschnitt wird durch eine Bewegung des Formstempels in Richtung der Halteeinrichtung umgeformt, gemäß dem Oberbegriff des Anspruchs 1.

Die Erfindung betrifft auch eine Werkzeugeinrichtung zum Durchführen des vorab beschriebenen Verfahrens, mit mindestens einer Halteeinrichtung und mindestens einem in Richtung der Halteeinrichtung bewegbaren Formstempel, wobei der umzuformende Abschnitt zwischen der Halteeinrichtung und dem Formstempel angeordnet ist, gemäß dem Oberbegriff des Anspruchs 4.

Eine solche Werkzeugeinrichtung bzw. ein solches Verfahren zum Umformen ist aus der US 5,133,206 bekannt.

Aus der deutschen Patentschrift DE 36 42 900 C2 ist ein Verfahren zum Umformen mindestens eines Abschnitts an einem weniger genau positionierten Körper um einen solchen Betrag bekannt, dass dessen Oberfläche demgegenüber in einer genauer definierten Position liegt. Das bekannte Umformverfahren wird mittels einer ortsbeweglichen Haltevorrichtung durchgeführt, die mindestens einen feststehenden Gegenhalter, dem oder den gegenüber bewegliche und arretierbare Haltemittel und mindestens einen in Richtung des oder der Gegenhalter bewegbaren Formblock aufweist, wobei der oder die Gegenhalter und die Haltemittel der ersten Oberfläche des Körpers und der oder die Formblöcke diesen gegenüberliegend der zweiten Oberfläche des Körpers zugewandt vorgesehen sind. Das bekannte Verfahren weist die folgenden Schritte auf: Exaktes Positionieren des oder der Gegenhalter im Bereich des oder der umzuformenden Abschnitte oberhalb der ersten Oberfläche des Körpers; dann Anlegen des oder der Haltemittel an der ersten Oberfläche des Körpers in diesem Bereich; danach Verriegeln des oder der Haltemittel in dieser Position und Aufsetzen und schließlich formendes Bewegen des oder der Formblöcke bis zur Anlage der Oberfläche(n) des oder der umzuformenden Abschnitte am oder an den Gegenhaltern.

Aus der deutschen Offenlegungsschrift DE 199 27 101 A1 ist ein Verfahren zum mechanischen Fügen von zwei flächigen Fügeteilen mittels Clinchen ohne Schneidanteil durch einen aktiven Stempel mit einer geradlinigen, schlagenden oder taumelnden Bewegung, einem Gegenstempel, einer festen oder beweglichen Matrize sowie einem Niederhalter zum Vorspannen der Fügeteile unter Ausbildung eines Halsbereiches und eines Hinterschnittbereiches bekannt. Das bekannte Verfahren ist **dadurch gekennzeichnet, dass** der Gegenstempel schon vor, während oder unmittelbar nach Beginn des Clinchvorgangs aktiv in Kontakt mit dem matrizenseitigen Fügeteil kommt und damit zum Stauchen beider Fügeteile herangezogen wird, so dass das stempelseitige Fügeteil durch die verringerte Abstreckung einen dickeren Halsbereich ausbildet und weiteres Material aus beiden Fügeteilen aus dem späteren Bodenbereich durch das Stauchen in den Halsbereich und den Hinterschnittbereich verdrängt wird.

Aus der deutschen Patentschrift DE 197 47 267 C2 ist ein Verfahren zum Durchsetzfügen von flächig aufeinander liegenden Blechteilen, bei dem mittels eines Werkzeugsatzes aus einem Stempel und einer einen Amboss aufweisenden Matrize Blechteile unter der Wirkung einer Umformenergie aus der Blechebene gemeinsam herausverlagert und gequetscht werden bekannt. Das bekannte Verfahren ist dadurch gezeichnet, dass die Umformenergie durch mehrere Impulse einer beschleunigt am Werkzeugsatz auftreffenden Masse zugeführt wird.

Aus der deutschen Patentschrift DE 195 24 164 C1 ist ein Verfahren zur Positionierung fertiggeformter Blechpressteile und eines robotergeführten Werkzeugs und die Herstellung von Schraubverbindungsstellen an fertiggeformten Blechpressteilen einer Fahrzeugkarosserie zum Ausgleich von Bauteiltoleranzen zwischen dem Blechpressteil und einem mit ihm zu verbindenden Karosserieteil und einer Einrichtung zur Durchführung desselben bekannt. Um in einfacher Weise eine präzise Positionierung und einen Bauteiltoleranzausgleich der Schraubverbindungsstellen am Blechpressteil zu gewährleisten, wird vorgeschlagen, dass die exakte Ist-Lage des Blechpressteils innerhalb des Arbeitsraums eines Industrieroboters in Relation zu ihm und die exakte Ist-Kontur nach dem Umfangsverlauf ermittelt werden. Diese Ist-Kontur wird mit den abgespeicherten Daten eines Referenzmodells verglichen und in maximale Überdeckung mit dem zu bearbeitenden Blechpressteil gebracht.

Aus der deutschen Patentschrift DE 39 32 532 C2 ist eine Werkzeugeinheit für kraftintensive Umformverfahren mit zwei Werkzeugelementen und zwei gegenüberliegenden, entgegengesetzt linear wirkenden pneumatischen oder hydraulischen Antrieb bekannt. Die bekannte Werkzeugeinheit ist **dadurch gekennzeichnet, dass** die beiden Antriebe in einem gemeinsamen Gehäuse untergebracht und außerhalb der Kraftwirkungslinie der beiden Werkzeugelemente angeordnet sind, wobei jedes Werkzeugelement an einem Bügel gehalten ist, so dass die einander gegenüberliegend angeordneten Bügel längs des gemeinsamen Gehäuses der Antriebe gleichzeitig linear verschiebbar gehalten sind, wobei jeder Bügel mit dem beweglichen Teil des betreffenden Antriebs lösbar verbunden ist.

Aufgabe der Erfindung ist es, ein alternatives Umformverfahren und eine alternative Werkzeugeinrichtung zum Durchführen des Umformverfahrens zu schaffen.

Die Aufgabe ist bei einem Verfahren der eingangs genannten Art dadurch gelöst, dass die Position und/oder die Bewegung des Formstempels erfasst werden/wird.

Die Position des Formstempels kann beispielsweise über ein Wegmesssystem erfasst werden. Ein solches Wegmesssystem umfasst vorzugsweise mindestens eine Sensoreinrichtung, durch welche die die Position des Formstempels und/oder der Halteeinrichtung relativ zu dem umzuformenden Abschnitt oder relativ zueinander erfasst wird. Vorzugsweise wird die Halteeinrichtung mit Hilfe des Wegmesssystems positioniert. Dadurch ist es möglich, die Halteeinrichtung exakt an dem umzuformenden Körper zu positionieren. Das kann zum Beispiel durch ein berührungsloses Annähern oder durch ein berührendes Antasten erfolgen.

Bei dem aus der deutschen Patentschrift DE 36 42 900 C2 bekannten Umformverfahren wird der Formstempel aus seiner Ausgangsstellung immer soweit bewegt, bis der Formstempel mit dem umzuformenden Abschnitt an dem als lagedefinierter Anschlag dienenden Gegenhalter anliegt. Der Gegenhalter bildet eine Matrize. Bei diesem bekannten Verfahren ist nicht vorgesehen, die Bewegung des Formstempels zu beeinflussen. Die erfindungsgemäße weggesteuerte Umformbewegung liefert dagegen den Vorteil, dass die Bewegung des Formstempels gezielt beeinflusst werden kann, um zum Beispiel Fehler beim Positionieren und/oder Toleranzen in der Dicke des umzuformenden Körpers zu berücksichtigen.

Ein bevorzugtes Ausführungsbeispiel des Verfahrens ist **dadurch gekennzeichnet, dass** der Formstempel in Abhängigkeit von der Position des Formstempels angetrieben wird. Dadurch ist es möglich, den Formstempel exakt zu positionieren. Bei dem Antrieb handelt es sich vorzugsweise um einen elektromotorischen oder hydraulischen Antrieb, der ggf. ein Getriebe umfassen kann.

Ein weiteres bevorzugtes Ausführungsbeispiel des Verfahrens ist **dadurch gekennzeichnet, dass** ein Korrekturwert ermittelt wird, der in Form einer zusätzlichen Kompensationsbewegung des Formstempels berücksichtigt wird.

Ferner wird die Aufgabe gelöst durch eine Werkzeugeinrichtung mit den Merkmalen des Anspruchs 4. Die Werkzeugeinrichtung zeichnet sich dadurch aus, dass die Steuereinrichtung mit einer Sensoreinrichtung gekoppelt ist, welche die Position und/oder die Bewegung des Formstempels und/oder der Halteeinrichtung erfasst.

Dabei kann die Kopplung eine mechanische Kopplung und/oder eine optische Kopplung und/oder eine andere geeignete Kopplung sein. Durch die Sensoreinrichtung kann zum Beispiel der Abstand zwischen dem Formstempel und dem umzuformenden Körper erfasst werden. Des Weiteren kann durch die Sensoreinrichtung der Abstand zwischen der Halteeinrichtung und dem umzuformenden Körper erfasst werden. Darüber hinaus kann durch die Sensoreinrichtung der Abstand zwischen dem Formstempel und der Halteeinrichtung erfasst werden.

Das liefert den Vorteil, dass der Formstempel ohne feststehenden Gegenhalter exakt positionierbar ist. Bei dem Antrieb kann es sich zum Beispiel um einen elektromotorischen oder um einen servohydraulischen Antrieb handeln.

Ein bevorzugtes Ausführungsbeispiel der Werkzeugeinrichtung ist **dadurch gekennzeichnet, dass** der Formstempel durch einen elektromotorischen Antrieb angetrieben ist. Durch den elektromotorischen Antrieb kann der Formstempel an beliebigen Positionen hinreichend lagegenau gestoppt werden. Gegebenenfalls können auch andere Antriebssysteme mit hinreichender Positioniergenauigkeit eingesetzt werden.

Ein weiteres mögliches Ausführungsbeispiel der Werkzeugeinrichtung ist **dadurch gekennzeichnet, dass** der Formstempel durch einen hydraulischen Antrieb angetrieben ist. Das hat den Vorteil, dass relativ große Kräfte auf den Formstempel aufgebracht werden können.

Ein weiteres bevorzugtes Ausführungsbeispiel der Werkzeugeinrichtung ist **dadurch gekennzeichnet, dass** die sensoreinrichtung in die Halteeinrichtung integriert ist. Vorzugsweise sind die Haltceinrichtung und die sensoreinrichtung in einen Grundkörper der Werkzeugeinrichtung integriert. Dadurch vereinfacht sich der Aufbau der erfindungzgemäßem Werkzeugeinrichtung.

Ein weiteres bevorzugtes Ausführungsbeispiel der Werkzeugeinrichtung ist **dadurch gekennzeichnet, dass** die Halteeinrichtung mindestens ein bewegbares und in Richtung des umzuformenden Abschnitts vorgespanntes Haltemittel umfasst. Das Haltemittel, das auch als Spannhalter bezeichnet wird, fungiert als Ziehkissen und gewährleistet eine planare Umformfläche an dem umzuformenden Körper.

Ein weiteres bevorzugtes Ausführungsbeispiel der Werkzeugeinrichtung ist **dadurch gekennzeichnet, dass** die sensoreinrichtung in das Haltemittel integriert ist. Dadurch wird es möglich, die Bewegung der Halteeinrichtung zu reduzieren, sobald oder bevor das Haltemittel zum ersten Mal in Kontakt mit dem umzuformenden Körper kommt. Die langsamere Bewegung der Halteeinrichtung liefert den Vorteil, dass die Halteeinrichtung sanfter an dem umzuformenden Körper in Anlage komme.

Ein weiteres bevorzugtes Ausführungsbeispiel der Werkzeugeinrichtung ist **dadurch gekennzeichnet, dass** die Sensoreinrichtung in eine Messeinrichtung integriert ist, die relativ zu der Halteeinrichtung bewegbar und in Richtung des umzuformenden Abschnitts vorgespannt ist. Dadurch wird es möglich, die Bewegung der Halteeinrichtung zu reduzieren, sobald die Messeinrichtung zum ersten Mal in Kontakt mit dem umzuformenden Körper kommt. Die langsamere Bewegung der Halteeinrichtung liefert den Vorteil, dass die Halteeinrichtung sanfter an dem umzuformenden Körper in Anlage kommt. Dadurch wird ein voreilendes, kraftfreies Zurückziehen der Halteeinrichtung ermöglicht.

Ein weiteres bevorzugtes Ausführungsbeispiel der Werkzeugeinrichtung ist **dadurch gekennzeichnet, dass** ein Stanzwerkzeug durch die Halteeinrichtung hindurch bewegbar ist. Mit Hilfe des Stanzwerkzeugs kann mindestens ein Durchgangsloch, das zum Beispiel zur Aufnahme von Befestigungsmitteln dient, in dem umzuformenden Abschnitt erzeugt werden.

Ein weiteres bevorzugtes Ausführungsbeispiel der Werkzeugeinrichtung ist **dadurch gekennzeichnet, dass** der Formstempel an einem Schenkel eines im Wesentlichen L-förmigen Bügels befestigt ist, dessen anderer Schenkel an einem Grundkörper der Werkzeugeinrichtung befestigt ist. Der Grundkörper und der Bügel bilden eine Umformzange. Die Halteeinrichtung und der Antrieb für den Formstempel sind vorzugsweise in den Grundkörper integriert.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

Dabei zeigen:
- Fig. 1: eine schematische Darstellung einer erfindungsgemä- ßen Werkzeugeinrichtung mit einem Formstempel in seiner Ausgangsstellung;
- Fig. 2: die Werkzeugeinrichtung aus Figur 1 mit dem Form- stempel in der Endstellung;
- Fig. 3: eine schematische Darstellung einer Variante der in den Figuren 1 und 2 dargestellten Werkzeugeinrich- tung mit einer bewegbaren Messhülse, wobei sich der Formstempel in seiner Ausgangsstellung befindet, und
- Fig. 4: die Werkzeugeinrichtung aus Figur 3 mit dem Form- stempel in seiner Endstellung.

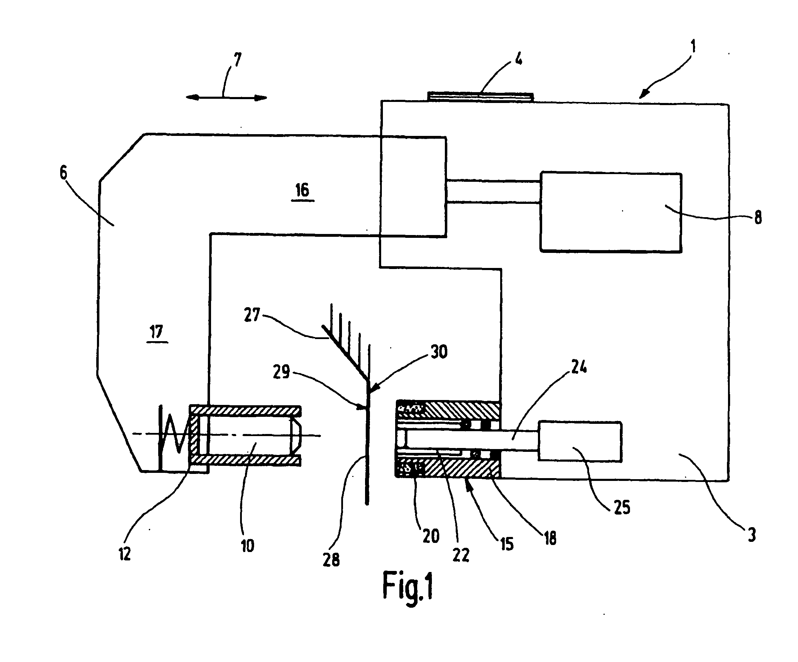

In Figur 1 ist eine Werkzeugeinrichtung 1 schematisch dargestellt, die einen Grundkörper 3 umfasst. Der Grundkörper 3 der Werkzeugeinrichtung 1 ist an einem Roboter 4 (Industrieroboter) oder an einem Roboterarm befestigt, so dass der Grundkörper 3 über den Roboter 4 in verschiedenen Richtungen im Raum bewegbar ist.

An dem Grundkörper 3 ist ein im Wesentlichen L-förmiger Bügel 6 so angebracht, dass er in Richtung eines Doppelpfeils 7 hin und her bewegbar ist. Der Bügel 6 ist durch einen elektromotorischen Antrieb 8 angetrieben, der in den Grundkörper 3 der Werkzeugeinrichtung 1 integriert ist. Der Bügel 6 weist einen Schenkel 16 auf, der senkrecht zu einem weiteren Schenkel 17 des Bügels 6 angeordnet ist. Das freie Ende des Schenkels 16 des Bügels 6 ist an dem Grundkörper 3 der Werkzeugeinrichtung 4 in Richtung des Doppelpfeils 7 hin und her bewegbar geführt.

An dem freien Ende des weiteren Schenkels 17 des Bügels 6 ist ein im Wesentlichen kreiszylinderförmiger Formstempel 10 starr, d.h. nicht relativbewegbar befestigt, wobei sich der Formstempel 10 parallel zu dem Schenkel 16 des Bügels 6 erstreckt. An dem Formstempel 10 ist ein federvorgespannter Spannhalter 12 in axialer Richtung des Formstempels 10 hin und her bewegbar geführt. Der Spannhalter 12 hat im Wesentlichen die Gestalt eines Kreiszylindermantels, dessen Innendurchmesser etwas größer als der Außendurchmesser des Formstempels 10 ist, so dass der Formstempel 10 und der Spannhalter 12 relativ zueinander in axialer Richtung verschiebbar sind.

Gegenüber dem Formstempel 10 ist eine Halteeinrichtung 15 an dem Grundkörper 3 der Werkzeugeinrichtung 1 befestigt. Die Halteeinrichtung 15 weist einen Haltekörper 18 auf, der starr mit dem Grundkörper 3 verbunden ist. Der Haltekörper 18 hat im Wesentlichen die Gestalt eines Kreiszylindermantels, der konzentrisch zu dem Formstempel 10 angeordnet ist. In das dem Formstempel 10 zugewandte Ende des Haltekörpers 18 ist eine Messsensoreinrichtung 20 beziehungsweise ein Messsystem integriert, das Kontaktsensoren und/oder Abstandssensoren umfasst.

In dem Haltekörper 18 ist ein federvorgespannter Spannhalter 22 hin und her bewegbar aufgenommen, der im Wesentlichen die Gestalt eines Kreiszylindermantels aufweist, dessen Außendurchmesser kleiner ist als der Innendurchmesser des Haltekörpers 18. In dem Spannhalter 22 ist ein Ende eines Stanzwerkzeugs 24 aufgenommen, dessen anderes Ende in einer Stanzvorrichtung 25 aufgenommen ist, die in den Grundkörper 3 integriert ist.

Zwischen dem Formstempel 10 und der Halteeinrichtung 15 ist ein Körper 27 mit einem umzuformenden Abschnitt 28 angeordnet. Der umzuformende Abschnitt 28 weist eine Oberfläche 29, die dem Formstempel 10 zugewandt ist, und eine Oberfläche 30 auf, die der Halteeinrichtung 15 zugewandt ist.

Im Betrieb wird die Werkzeugeinrichtung 1, die auch als Umformzange bezeichnet wird, mit Hilfe des Roboters 4 in die in Figur 1 dargestellte Ausgangsposition gebracht. Der Bügel 6 mit dem Formstempel 10 ist in Richtung des Doppelpfeils 7 relativ zu dem Grundkörper 3 der Werkzeugeinrichtung 1 über den elektromotorischen Antrieb 8, der mit dem integrierten Wegmesssystem 20 gekoppelt ist, exakt positionierbar. Die erfindungsgemäße Werkzeugeinrichtung und das erfindungsgemäße Verfahren dienen dazu, den umzuformenden Abschnitt 28 an dem weniger genau positionierten Körper 27 um einen solchen Betrag umzuformen, dass dessen Oberflächen 29 -und somit auch indirekt dessen Oberfläche 30- demgegenüber in einer genau definierten Position zu liegen kommen.

Der Haltekörper 18 wird durch Verfahren der Werkzeugeinrichtung 1 mit Hilfe des Messsystems 20, das Weg- oder Kontaktsensoren umfasst, im Bereich der umzuformenden Oberfläche 30 des aus Blech gebildeten Körpers 27 in Position gebracht. Dies kann zum einen durch berührungsloses Annähern oder berührendes Antasten an die Oberfläche 30 erfolgen. Anschließend wird eine weggesteuerte Schiebebewegung des Bügels 6 und somit des Formstempels 10 auf den umzuformenden Abschnitt 28 zu bis zu einer mit Hilfe des Messsystems 20 ermittelten Endposition ausgelöst. Dabei erfolgt gleichzeitig eine Relativbewegung des Formstempels 10 zum federvorgespannten Spannhalter 12 in axialer Richtung.

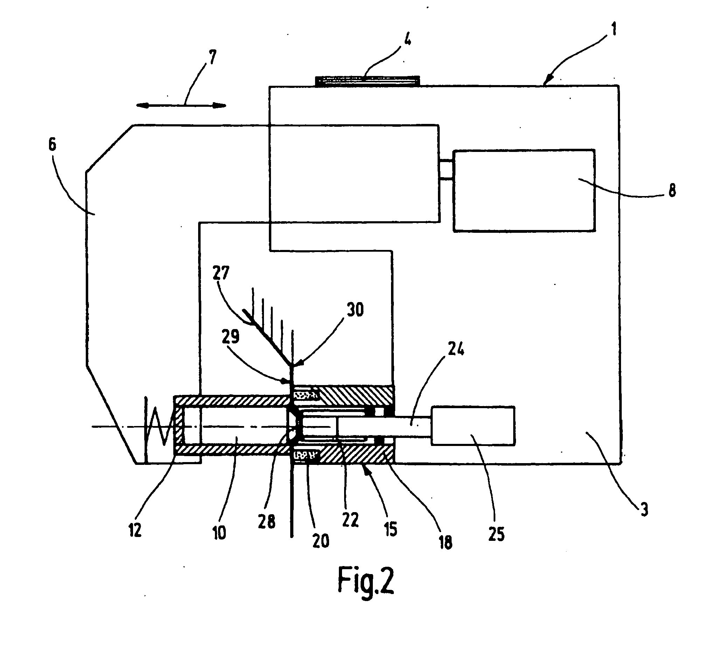

Die mit Hilfe des Wegmesssystems 20 ermittelte Endposition des Formstempels 10 ist in Figur 2 dargestellt. In Figur 2 sieht man auch, dass sich der Haltekörper 18 in Anlage an der Oberfläche 30 des umzuformenden Abschnitts 28 befindet. Das freie Ende des Formstempels 10 befindet sich nicht in Anschlag an einem Teil der Halteeinrichtung 15. Das freie Ende des Formstempels 10 befindet sich lediglich in Anlage an dem umzuformenden Abschnitt 28. Die in Figur 2 dargestellte Endposition des Formstempels 10 wird weggesteuert über den elektromotorischen Antrieb 8 eingenommen.

Um eine unerwünschte Aufbiegung des Bügels 6 und die damit zusammenhängende Ungenauigkeit der Umformtiefe beziehungsweise Prägetiefe zu kompensieren, kann ein Korrekturwert anhand einer Kennlinie ermittelt und als zusätzliche Prägetiefe zugestellt werden. In der in Figur 2 dargestellten Umformstellung der Werkzeugeinrichtung 1 befindet sich der umzuformende Körperabschnitt 28 des Körpers 27 mit seiner Oberfläche 29 in der definierten Endposition, wobei diese definierte Endposition unabhängig von dem federgelagerten Spannhalter 22 erhalten wird. Der Spannhalter 22 dient lediglich als Ziehkissen, das sich zusammen mit dem umzuformenden Abschnitt 28 gegen die Federvorspannkraft bewegt.

Als letzter Verfahrensschritt wird der positionsgenau umgeformte Abschnitt 28 mit Hilfe des Stanzwerkzeugs 24 gelocht.

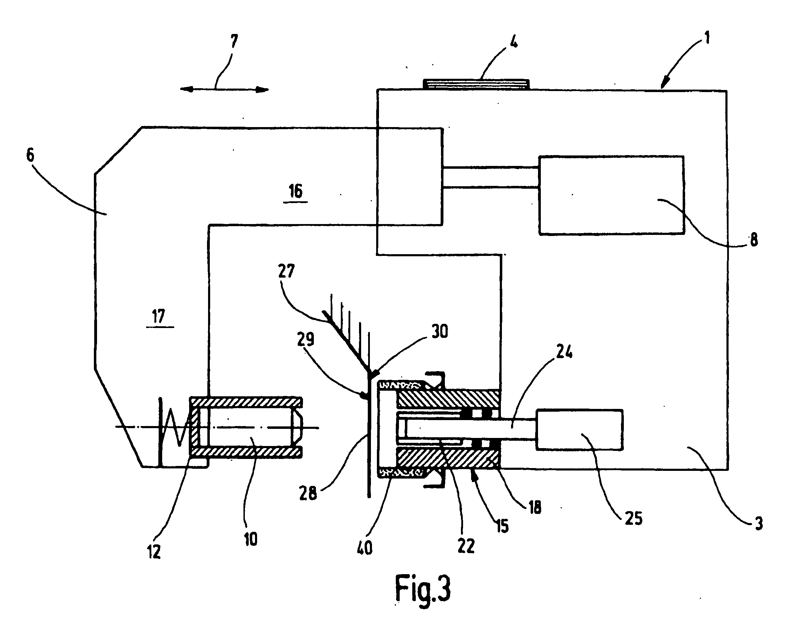

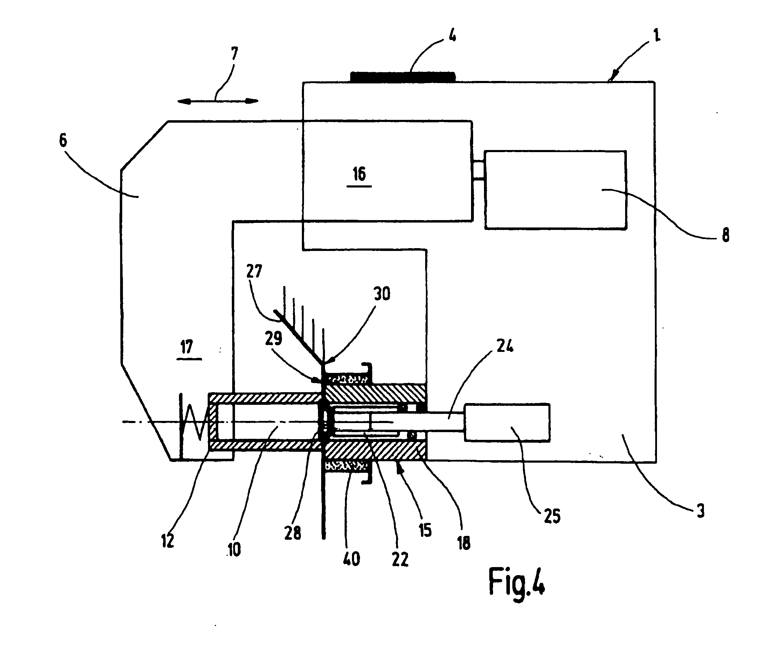

In den Figuren 3 und 4 ist ein ähnliches Ausführungsbeispiel wie in den Figuren 1 und 2 schematisch dargestellt. Gleiche Teile sind mit gleichen Bezugszeichen versehen. Um Wiederholungen zu vermeiden, wird auf die vorangegangene Beschreibung der Figuren 1 und 2 verwiesen. Im Folgenden wird nur auf die Unterschiede zwischen den beiden Ausführungsbeispielen eingegangen.

Bei dem in den Figuren 3 und 4 dargestellten Ausführungsbeispiel ist eine im Wesentlichen kreiszylindermantelförmige Messhülse 40 am äußeren Umfang des Haltekörpers 18 in axialer Richtung gegen die Vorspannkraft einer Feder verschiebbar geführt. Die federgelagerte Messhülse 40 umfasst ein integriertes Wegmesssystem mit Kontakt- und/oder Abstandssensoren. Die Messhülse 40 liefert den Vorteil, dass die Verfahrgeschwindigkeit des Roboters 4 reduziert werden kann, sobald die Messhülse 40 in Kontakt mit der Oberfläche 30 des umzuformenden Abschnitts 28 kommt. Dadurch kann der Roboter 4 entlang des Restverfahrweges des Haltekörpers 18 bis zu der Oberfläche 30 des umzuformenden Abschnitts 28 langsamer bewegt werden, um ein sanftes Inanlagekommen des starren Haltekörpers 18 an der Oberfläche 30 des umzuformenden Abschnitts 28 zu ermöglichen.

## Patentansprüche

1. Verfahren zum Umformen mindestens eines Abschnitts (28) an einem weniger genau positionierten Körper (27) um einen solchen Betrag, dass der umzuformende Abschnitt (28) demgegenüber in einer genauer definierten Position liegt, mittels einer Werkzeugeinrichtung (1), die mindestens eine Halteeinrichtung (15) und mindestens einen in Richtung der Halteeinrichtung (15) bewegbaren Formstempel (10) aufweist, wobei der umzuformende Abschnitt (28) zwischen der Halteeinrichtung (15) und dem Formstempel (10) angeordnet ist, mit folgenden Schritten: Die Halteeinrichtung (15) wird an dem umzuformenden Abschnitt (28) positioniert; der umzuformende Abschnitt (28) wird durch eine Bewegung des Formstempels (10) in Richtung der Halteeinrichtung (15) umgeformt, wobei die Umformbewegung des Formstempels (10) in Abhängigkeit von der Position des Formstempels (10) ohne feststehenden Gegenhalter kontrolliert so gesteuert wird, dass der Formstempel in einer definierten Endposition gestoppt wird, **dadurch gekennzeichnet, dass** die Position und/oder die Bewegung des Formstempels erfasst werden/wird.

2. Verfahren nach Anspruch 1, **dadurch gekennzeichnet, dass** der Formstempel (10) in Abhängigkeit von der Position des Formstempels (10) angetrieben wird.

3. Verfahren nach einem der vorhergehenden Ansprüche, **dadurch gekennzeichnet, dass** ein Korrekturwert ermittelt wird, der in Form einer zusätzlichen Kompensationsbewegung des Formstempels berücksichtigt wird.

4. Werkzeugeinrichtung zum Durchführen des Verfahrens nach einem der vorhergehenden Ansprüche, mit mindestens einer Halteeinrichtung (15) und mit mindestens einem in Richtung der Halteeinrichtung bewegbaren Formstempel (10), wobei der umzuformende Abschnitt (28) zwischen der Halteeinrichtung (15) und dem Formstempel (18) angeordnet ist, ein Antrieb für den Formstempel (10) mit einer Steuereinrichtung gekoppelt ist, durch welche die Umformbewegung des Formenstempels (10) in Abhängigkeit von der Position des Formstempels (10) ohne feststehenden Gegenhalter kontrolliert so gesteuert wird, und der Formstempel in einer definierten Endposition gestoppt wird, **dadurch gekennzeichnet, dass** die Steuereinrichtung mit einer Sensoreinrichtung (20;40) gekoppelt ist, welche die Position und/oder die Bewegung des Formstempels (10) und/oder der Halteeinrichtung (15) erfasst.

5. Werkzeugeinrichtung nach Anspruch 4, **dadurch gekennzeichnet, dass** der Formstempel (10) durch einen elektromotorischen Antrieb (8) angetrieben ist.

6. Werkzeugeinrichtung nach Anspruch 4, **dadurch gekennzeichnet, dass** der Formstempel (10) durch einen hydraulischen Antrieb (8) abgetrieben ist.

7. Werkzeugeinrichtung nach Anspruch 4, **dadurch gekennzeichnet, dass** die Sensoreinrichtung (20) in die Halteeinrichtung (15) integriert ist.

8. Werkzeugeinrichtung nach einem der Ansprüche 4 bis 7, **dadurch gekennzeichnet, dass** die Halteeinrichtung (15) mindestens ein bewegbares und in Richtung des umzuformenden Abschnitts (28) vorgespanntes Haltemittel (22) umfasst.

9. Werkzeugeinrichtung nach Anspruch 8, **dadurch gekennzeichnet, dass** die Sensoreinrichtung in das Haltemittel (22) integriert ist.

10. Werkzeugeinrichtung nach einem der Ansprüche 4 bis 9, **dadurch gekennzeichnet, dass** die Sensoreinrichtung in eine Messeinrichtung (40) integriert ist, die relativ zu der Halteeinrichtung (15) bewegbar und in Richtung des umzuformenden Abschnitts (28) vorgespannt ist.

11. Werkzeugeinrichtung nach einem der Ansprüche 4 bis 10, **dadurch gekennzeichnet,**
**dass** ein Stanzwerkzeug (24) durch die Halteeinrichtung (15) hindurch bewegbar ist.

12. Werkzeugeinrichtung nach einem der Ansprüche 4 bis 11, **dadurch gekennzeichnet,**
**dass** der Formstempel (10) an einem Schenkel (17) eines im Wesentlichen L-förmigen Bügels (6) befestigt ist, dessen anderer Schenkel (16) an einem Grundkörper (3) der Werkzeugeinrichtung (1) angebracht ist.

## Claims

1. Method for forming at least one portion (28) on a less precisely positioned body (27) by an amount such that the portion (28) to be formed is located in a more precisely defined position in comparison, by means of a tool device (1), which has at least one holding device (15) and at least one forming die (10) which can be moved in the direction of the holding device (15), the portion (28) to be formed being arranged between the holding device (15) and the forming die (10), comprising the following steps: the holding device (15) is positioned on the portion (28) to be formed: the portion (28) to be formed is formed by a movement of the forming die (10) in the direction of the holding device (15), the forming movement of the forming die (10) being guided depending on the position of the forming die (10) without a fixed counter support in a controlled manner in such a way that the forming die is stopped in a defined end position, **characterised in that** the position and/or the movement of the forming die is/are detected.

2. Method according to claim 1, **characterised in that** the forming die (10) is driven depending on the position of the forming die (10).

3. Method according to any one of the preceding claims, **characterised in that** a correction value is determined, which is taken into account in the form of an additional compensation movement of the forming die.

4. Tool device for carrying out the method according to any one of the preceding claims, with at least one holding device (15) and with at least one forming die (10) which can be moved in the direction of the holding device, the portion (28) to be formed being arranged between the holding device (15) and the forming die (18), a drive for the forming die (10) being coupled to a control device, by means of which the forming movement of the forming die (10) is guided depending on the position of the forming die (10) without a fixed counter support in a controlled manner and the forming die is stopped in a defined end position, **characterised in that** the control device is coupled to a sensor device (20: 40), which detects the position and/or the movement of the forming die (10) and /or the holding device (15).

5. Tool device according to claim 4, **characterised in that** the forming die (10) is driven by an electric motor drive (8).

6. Tool device according to claim 4, **characterised in that** the forming die (10) is driven by a hydraulic drive (8).

7. Tool device according to claim 4, **characterised in that** the sensor device (20) is integrated in the holding device (15).

8. Tool device according to any one of claims 4 to 7, **characterised in that** the holding device (15) comprises at least one holding means (22) which is moveable and is prestressed in the direction of the portion (28) to be formed.

9. Tool device according to claim 8, **characterised in that** the sensor device is integrated in the holding means (22).

10. Tool device according to any one of claims 4 to 9, **characterised in that** the sensor device is integrated in a measuring device (40), which can be moved relative to the holding device (15) and is prestressed in the direction of the portion (28) to be formed.

11. Tool device according to any one of claims 4 to 10, **characterised in that** a stamping tool (24) can be moved through the holding device (15).

12. Tool device according to any one of claims 4 to 11, **characterised in that** the forming die (10) is fastened to a leg (17) of a substantially L-shaped bracket (6), the other leg (16) of which is attached to a base body (3) of the tool device (1).

## Revendications

1. Procédé de formage d'au moins un tronçon (28) sur un corps (27) positionné moins précisément, d'une telle quantité que le tronçon (28) à former se trouve par contre dans une position définie plus exactement, au moyen d'un équipement d'usinage (1) qui présente au moins un dispositif de maintien (15) et au moins un piston de formage (10) déplaçable dans la direction du dispositif de maintien, le tronçon (28) à former étant agencé entre le dispositif de maintien (15) et le piston de formage (10), comprenant les étapes suivantes : on positionne le dispositif de maintien (15) sur le tronçon (28) à former ; on forme le tronçon (28) à former par un mouvement du piston de formage (10) en direction du dispositif de maintien (15), le mouvement de formage du piston de formage (10) étant piloté de façon contrôlée en fonction de la position du piston de formage (10) sans contre-appui fixe, de façon que le piston de formage soit arrêté dans une position extrême définie, **caractérisé en ce que** l'on détecte la position et/ou le mouvement du piston de formage.

2. Procédé selon la revendication 1, **caractérisé en ce que** l'on actionne le piston de formage (10) en fonction de la position du piston de formage (10).

3. Procédé selon l'une des revendications précédentes, **caractérisé en ce que** l'on détermine une valeur de correction que l'on prend en compte sous la forme d'un mouvement de compensation additionnel du piston de formage.

4. Equipement d'usinage pour mettre en oeuvre le procédé selon l'une des revendications précédentes, comprenant au moins un dispositif de maintien (15) et au moins un piston de formage (10) déplaçable en direction du dispositif de maintien, le tronçon (28) à former étant agencé entre le dispositif de maintien (15) et le piston de formage (10), un entraînement pour le piston de formage (10) étant couplé à un dispositif de pilotage grâce auquel le mouvement de formage du piston de formage (10) est piloté de façon contrôlée sans contre-appui fixe, en fonction de la position du piston de formage (10), et le piston de formage étant arrêté dans une position extrême définie, **caractérisé en ce que** le dispositif de pilotage est couplé à un dispositif capteur (20 ; 40), lequel détecte la position et/ou le mouvement du piston de formage (10) et/ou du dispositif de maintien (15).

5. Equipement d'usinage selon la revendication 4, **caractérisé en ce que** le piston de formage (10) est actionné par un entraînement (8) électromoteur.

6. Equipement d'usinage selon la revendication 4, **caractérisé en ce que** le piston de formage (10) est actionné par un entraînement (8) hydraulique.

7. Equipement d'usinage selon la revendication 4, **caractérisé en ce que** le dispositif capteur (20) est intégré dans le dispositif de maintien (15).

8. Equipement d'usinage selon l'une des revendications 4 à 7, **caractérisé en ce que** le dispositif de maintien (15) comprend au moins un moyen de maintien (22) déplaçable, et précontraint en direction du tronçon (28) à former.

9. Equipement d'usinage selon la revendication 8, **caractérisé en ce que** le dispositif capteur est intégré dans le moyen de maintien (22).

10. Equipement d'usinage selon l'une des revendications 4 à 9, **caractérisé en ce que** le dispositif capteur est intégré dans un dispositif de mesure (40) qui est déplaçable par rapport au dispositif de maintien (15) et précontraint en direction du tronçon (28) à former.

11. Equipement d'usinage selon l'une des revendications 4 à 10, **caractérisé en ce qu'**un outil de poinçonnage (24) est déplaçable à travers le dispositif de maintien (15).

12. Equipement d'usinage selon l'une des revendications 4 à 11, **caractérisé en ce que** le piston de formage (10) est fixé à une branche (17) d'une potence (6) sensiblement en forme de L, dont l'autre branche (16) est montée sur un corps de base (3) de l'équipement d'usinage (1).
